# EUROPEAN PATENT APPLICATION

(11) **EP 3 090 665 A2**
(43) Date of publication of application: **09.11.2016**
(21) Application number: 16168468.3
(22) Date of filing: 30.01.2014
(51) Int. Cl.: A47J 31/44

(54) **HOUSEHOLD COFFEE-MAKING MACHINE**

(30) Priority: 30.01.2013 IT TO20130074; 30.01.2013 IT TO20130075; 30.01.2013 IT TO20130076; 30.01.2013 IT TO20130077; 30.01.2013 IT TO20130079
(62) Divisional of application: 14714329.1
(71) Applicant: Indesit Company S.p.A., 60044 Fabriano (AN) (IT)
(72) Inventor: RIDERELLI BELLI, Marcello, 60027 Osimo (AN) (IT); GIUBBILEI, Dino, 60044 Fabriano (AN) (IT); MOZZON, Gioacchino, 18017 Costarainera (IM) (IT)
(74) Representative: Guerci, Alessandro

(57) **Abstract**

The current invention relates to a household coffee-making machine comprising a compartment (306), a tank (304) for water supply, which is adapted to be at least partially contained in the compartment, and a tank lighting system installed in the compartment.

## Description

### Field of the invention

The present invention relates to the field of household appliances, more specifically to a household coffee-making machine with an extractable water tank drawer.

### Background art

A household coffee-making machine is known which has now become widespread mainly in domestic environments.

It essentially comprises a coffee-dispensing assembly, a water heating boiler, a water tank, and a pump assembly that takes water to the boiler and then supplies it under pressure, when heated, to the coffee-dispensing assembly, which produces coffee that is collected into an external container, e.g. a coffee cup.

Coffee-making machines are becoming increasingly widespread which utilize pods or capsules of ground coffee to be inserted into a capsule-holding component, onto which pressurized hot water is delivered and from which coffee ready for drinking comes out. In the coffee-making machines known in the art, the water tank, which is of the extractable type, is positioned on one side or at the rear and must be extracted manually for cleaning or refilling operations. These positions of the tank are uncomfortable, and water may spill outside or on the machine itself, resulting in the risk that electric parts of the machine might be wetted and cause a short-circuit, or that the tank might fall. In any case, difficulties are encountered in known machines when inserting the tank into the machine and/or fitting the tank into the machine's structure.

### Summary of the invention

It is therefore one object of the present invention to propose a household coffee-making machine with an extractable water tank drawer, which overcomes the above-mentioned drawbacks.

The present invention relates to a household coffee-making machine comprising: a compartment with a front aperture in the bottom part of the machine; a drawer adapted to be totally inserted into said compartment and extracted frontally from said compartment; a tank adapted to be removably laid into said drawer, or to be at least partially integrated into said drawer, so as to be fully contained in said compartment when the drawer has been totally inserted into the compartment.

The present invention particularly relates to a household coffee-making machine with an extractable water tank drawer as specifically set out in the claims, which are an integral part of the present description.

### Brief description of the drawings

Further objects and advantages of the present invention will become apparent from the following detailed description of a preferred embodiment (and variants) thereof and from the annexed drawings, which are only supplied by way of non-limiting example, wherein:
Figures 1 , 2 and 7 show the coffee-making machine of the invention with the water tank drawer in the fully open, closed and partially open positions, respectively;
Figures 3 and 4 show the drawer and the water tank in an exploded view and, respectively, in a view showing the various components assembled together;

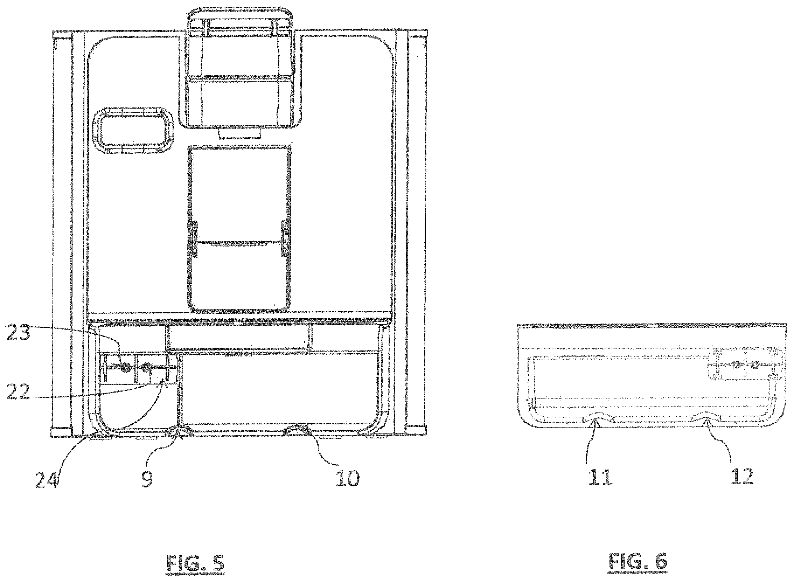

Figures 5 and 6 are front views of the coffee-making machine and of the rear side of the drawer with the tank included, respectively;
Figure 8 is an exploded bottom view of the tank;
Figure 9 shows a horizontal sectional view of the machine, with an enlarged detail of a part comprising fittings for the inner tubes;
Figure 10 shows the coffee-making machine equipped with a system for fastening it to a vertical surface;
Figures 11 and 12 show two exploded views from different angles of the coffee-making machine equipped with the system for fastening it to a vertical surface;
Figures 13 and 14 show two sectional side views of the machine with the fastening system, respectively along A-A and B-B of Figure 1 ;
Figures 15 and 16 show rear and front views, respectively, of the coffee-making machine;
Figures 17 and 18 show rear and front views, respectively, of the internal part of the coffee-making machine;
Figure 19 shows the coffee-making machine with the water tank drawer open, with some light points visible;
Figure 20 shows an exploded view of the drawer and water tank;
Figure 21 is a front view of the coffee-making machine, with some other light points visible;
Figure 22 is a front view of the rear side of the drawer with the tank included;
Figure 23 is a partial bottom view of the machine;
Figure 24 is a horizontal sectional view of the machine;
Figures 25 and 26 show a front view and a bottom view, respectively, of one example of coffee-making machine;
Figure 27 is a side view of the coffee-making machine, with the cup lighting system highlighted and enlarged;
Figure 28 is a front view of the machine with a separate used-capsule drawer.

### Detailed description of some embodiments of the invention

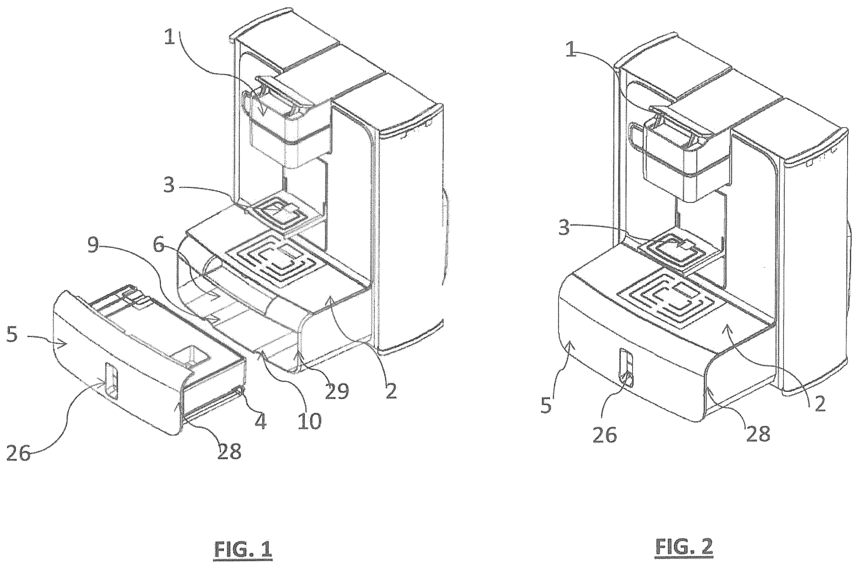

With reference to Figures 1 and 2, there is shown one example of embodiment of a household coffee-making machine, viewed from the outside: as is known, inside of it there are a coffee-dispensing assembly, a water heating boiler, a pump assembly, which takes the water to the boiler and then supplies it under pressure, when heated, to the coffee-dispensing assembly 1 that produces coffee. As it is dispensed by the dispensing assembly 1 , the coffee is collected into an external container, e.g. a cup, that can be laid onto the base 2, since said base 2 protrudes forwards from the rest of the machine's structure, or, if a small coffee cup is used, on a front flap 3, which is located at an intermediate height between the base and the dispenser, and which can be rotated, e.g. about a vertical axis, between a working position, wherein it is available as a support for a cup, and an idle position, wherein it does not interfere with the positioning of another cup on the base 2.

In accordance with one aspect of the present invention, the boxed-shaped water tank is housed inside a drawer 5, which can be fully extracted from the front side of the machine. In the lower front part of the machine, under the base 2, a compartment 6 is formed which is adapted to contain the drawer and the tank, and which preferably protrudes forwards from the machine body. The compartment may be approximately 8-10 cm high.

Therefore, the tank is advantageously easily accessible, thus improving the user's comfort.

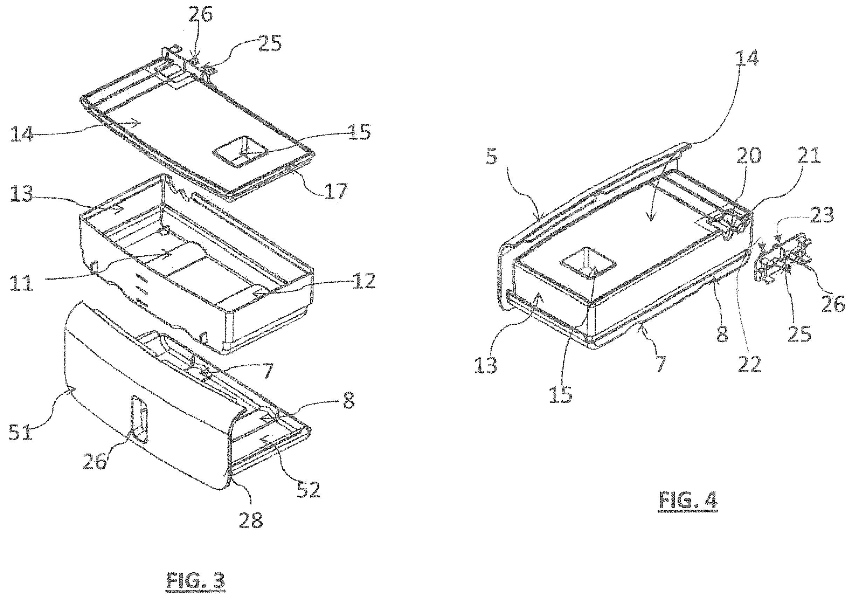

The drawer comprises a front part 51 and a base 52 (Fig. 3). The tank 4 is removably laid or constrained onto the base 52 of the drawer 5. The tank base rests on the drawer base, thus also allowing the tank to be easily extracted for cleaning.

On the bottom of the drawer there are two concave profiles 7, 8 acting as guides for the correct positioning on matching concavities 9, 10 on the bottom of the machine base.

Corresponding concavities 11, 12 are also present on the bottom of the tank, so that it can be correctly positioned in the drawer.

The concavities 7 - 12 extend along the depth dimension of the various elements, since this is the dimension along which the drawer can slide.

With particular reference to Figures 3, 4, 8, it can be noticed that the tank comprises a water tray 13 and a cover 14. On the surface of the cover there is a spout-like or funnellike hole 15 for water supply; the spout comprises lateral expansions extending towards the inside of the tank, which are useful to prevent water splashes towards the outside and to appropriately convey the water into the tank for filling the latter.

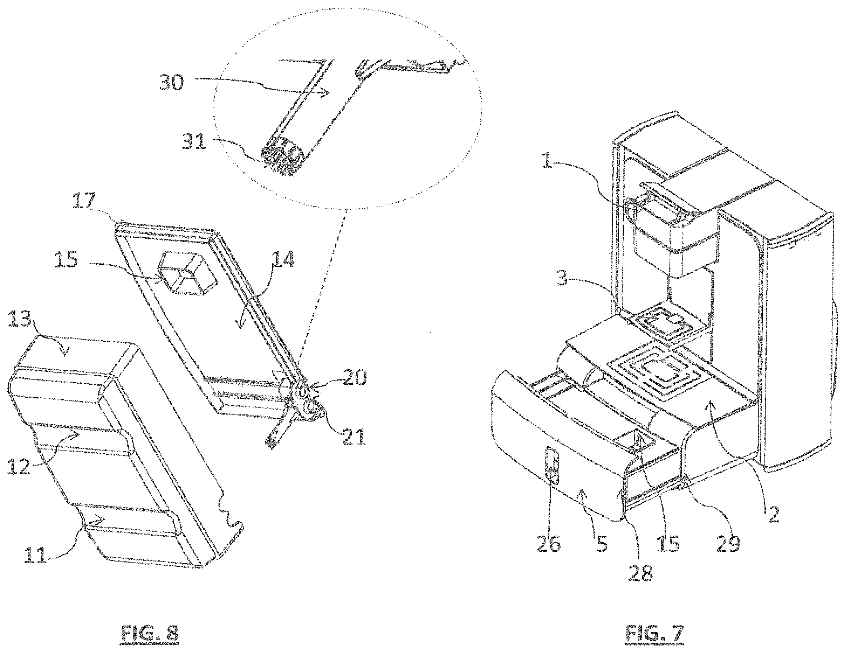

Typically, the drawer is only partially extracted (Fig. 7) in order to refill the tank with water. Since the drawer is not removed when it has to be refilled, but is only partially extracted, there is much less risk of spilling water due to inappropriate inclination; consequently, the tank can be filled more, thus increasing its actual capacity.

The tank cover 14 rests on the tray 13, a peripheral groove 17 thereof engaging with the tray edge. The cover offers no resistance when pulled vertically, but the groove prevents it from sliding sideways.

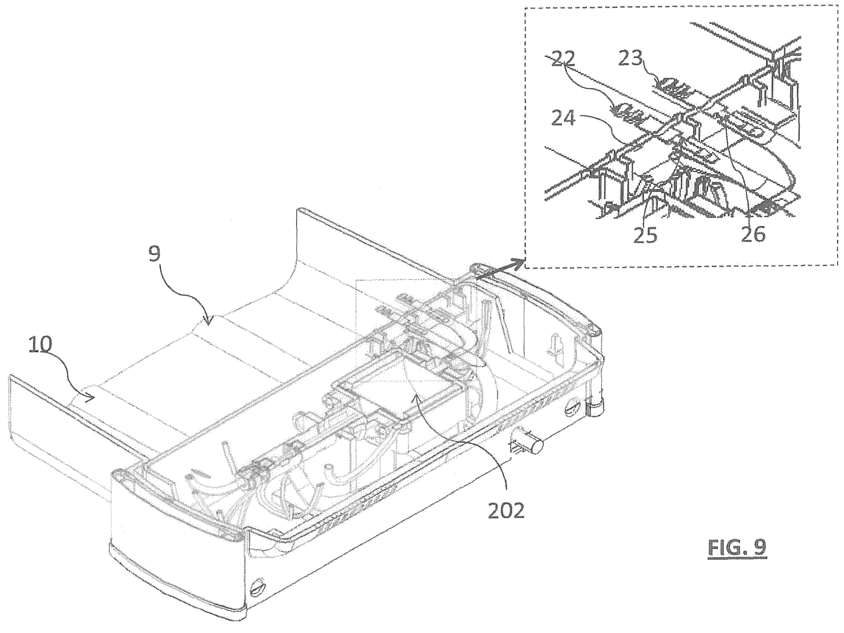

The cover comprises couplings 20, 21, with male or female connectors joining corresponding female or male connectors 22, 23 inside the machine base (Fig. 9), which constitute terminations of inner tubes of the machine. For establishing said connection, there may be a hydraulic fitting 24, preferably made as one piece and equipped with suitable means for fastening it to the structure of the machine. The hydraulic fitting 24 fits into the machine base, preferably by means of elastic hooks, and stays integral with the machine as the drawer position changes. The hydraulic fitting 24 further comprises, on one side, integral terminations 22, 23 joining the couplings 20, 21 of the cover, and, on the other side, terminations 25, 26 that connect to the tubes that put such terminations in communication with the pump assembly 202 (Fig. 9). In particular, a first tube is used for sucking water from the tray through the pump, and a second tube is used for draining any excess hot clean water into the tank following coffee production. The drain function is useful for regulating the hot water pressure in the machine, which may become as high as approx. 19 BAR.

The water is sucked from the bottom of the tank by means of a tube 30 (Fig. 8), which is advantageously made as one piece with the cover, and which extends from one of the couplings, e.g. the coupling 21, on the cover and, after a 90-degree bend, runs vertically downwards, ending with a water suction termination 31 (enlarged in Fig. 8) comprising a number of narrow vertical slots evenly arranged at its periphery, adapted to prevent the intrusion of any solid particles that might be present in the water (the termination 31 thus performing a filtering function).

The excess hot water is drained from above, in particular from the top of the cover, immediately downstream of the other coupling, e.g. the coupling 20. When the drawer is closed, the couplings 20 and 21 are respectively engaged by pressure with the terminations 22, 23, with O-rings in between to ensure a proper seal, so that when opening the drawer a certain pressure must be exerted in order to overcome the tightness between the mutually connected elements.

The drawer advantageously has a front inspection window 26 for verifying the level of the water in the tank, which is made of transparent material.

The front edge of the drawer has a contour 28 that protrudes from the contour line 29 of the base of the machine into which it is inserted. This is useful for gripping the drawer while extracting it.

The materials used for making the components of the machine are per se known, e.g. ABS plastic. The transparent plastic parts, in particular the water tank, are made, for example, of polycarbonate or SAN.

According to an advantageous variant of the present invention, the tray 13 and the drawer 5 may be obtained as one transparent piece (e.g. made of SAN), and its front part 51 (with the exception of the window 26) may then be opacified, in order to improve the exterior appearance of the machine, through an overmoulding or silk-screening operation or by applying a decorative plate.

Further aspects of the invention will now be described, which come from the need for solving the problems described below. Such further aspects may be combined with any previously and/or subsequently described aspects of the invention, or may per se constitute a separate invention.

Said type of coffee-making machine is normally laid on a flat horizontal surface. In such a case, however, stability problems may arise, along with possible safety problems due to the possibility that the machine, if hit, might fall down to the ground.

A further problem is that in many household environments, especially in kitchens, there is not enough room for positioning all the necessary household appliances, so that it would be desirable to be able to free up some usable space. In particular, the coffee- making machine is typically laid on a worktop, thus occupying a considerable portion of said worktop and de facto making it unusable for different objects and/or purposes. The household coffee-making machine according to one aspect of the invention comprises a hook-type system for fastening it to a vertical surface, said system comprising: a plate adapted to be fastened to said vertical surface and comprising: a flat central body with holes for fastening it to the vertical surface; an upper part with at least one first hole; a lower part comprising a projecting central fold and side holes; a slotlike cavity in the back wall of the machine, adapted to engage with the projecting central fold of the plate; hooks on the back wall of the machine, adapted to engage into said first hole and side holes of the plate.

In said coffee-making machine, said plate" comprises a projection in said upper part, where there is said at least one first hole, and wherein the back wall of the machine comprises an outwardly projecting lower area and an upper area recessed relative to the lower projection, said projection of the plate being adapted to take up said recess of the upper area.

In said coffee-making machine, the hook on the back wall of the machine, which is adapted to engage into said first hole, is shaped like an "L" turned downwards.

In said coffee-making machine, said hooks on the back wall of the machine, which are adapted to engage into said side holes of the plate, are of the clip type.

In said coffee-making machine, said flat central body is vertically symmetrical.

The plate is adapted to be fastened to a vertical surface and to be used in a hook-type system for fastening a coffee-making machine to a vertical surface.

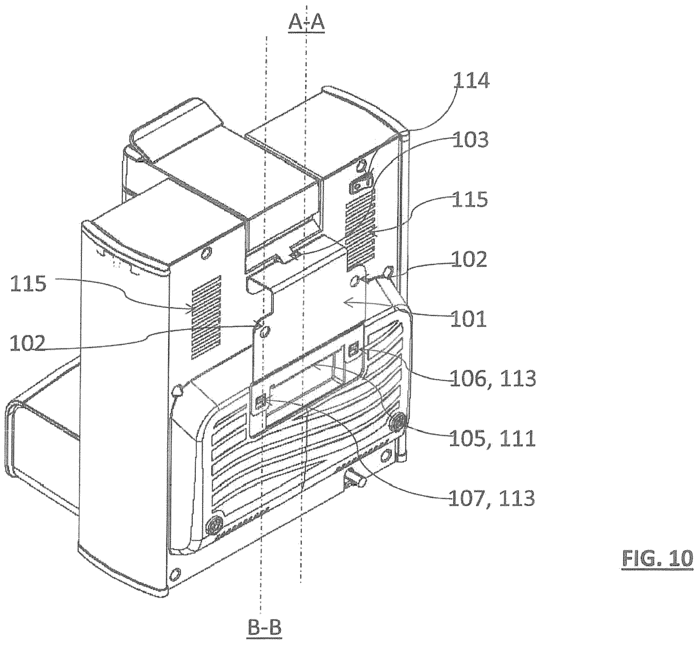

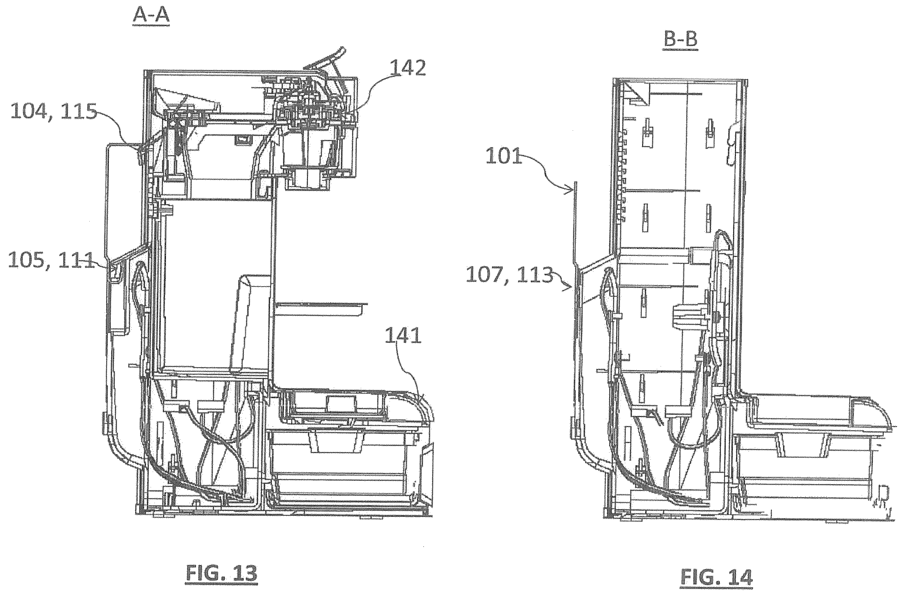

With reference to Figures 10 to 14, there is shown one example of embodiment of a household coffee-making machine, viewed from the outside: as is known, inside of it there are a coffee-dispensing assembly, a water heating boiler, a pump assembly, which takes the water to the boiler and then supplies it under pressure, when heated, to the coffee-dispensing assembly that produces coffee.

In accordance with one aspect of the present invention, the fastening system comprises a plate or bracket 101 adapted to be fastened to a vertical surface, e.g. a wall.

The plate comprises a flat central body, which is advantageously vertically symmetrical, with holes 102 for fastening it to the wall, e.g. by means of expansion nails or screws; an upper part with a U-shaped projection 103 having a central hole 104; a lower part comprising a projecting U-shaped central fold 105, and two side holes 106, 107.

The back wall of the machine comprises an outwardly projecting lower area 108 and an upper area 109, recessed relative to the lower projection.

In the upper area 109 there is, in a central position, an hook shaped like an "L" turned downwards, which is adapted to engage into the central hole 104 in the upper part of the plate 101.

in the lower area 108 there are a slot-like central cavity 111 and two clip-type side hooks 112,113.

The projecting U-shaped central fold 105 of the plate is adapted to engage into the slotlike central cavity 111 of the back wall, thus creating a horizontal supporting surface, whereas the two clip-type side hooks 112, 113 are adapted to engage into the two side holes 106, 107 of the plate. To this end, the lower part of the plate has a recess towards the machine, so as to leave enough room for housing the hooks 112, 113 when the latter have been engaged into the holes 106, 107. The engagement between the hooks 110, 112, 113 and the respective holes creates three non-aligned points of constraint between the machine and the plate 101: this neutralizes the three degrees of freedom in the interface surface between the machine and the plate, thereby preventing the machine from turning over. The projecting U-shaped central fold 105 is adapted to support the machine, while the lower and upper hooks are adapted to fasten the machine to the plate.

The projection 103 of the plate is adapted to take up the recess of the upper part of the back wall of the machine.

In the recessed upper part of the back wall there are a power switch 114 of the machine, with enough room for introducing a hand to actuate it, and slots 115 for the air that cools the internal components of the machine by convection, while the projecting lower part acts as an abutment against the wall.

In order to hang the machine on the wall, after having fastened the plate to the wall it is necessary to hook the slot-like central cavity 111 into the projecting central fold 105 of the plate and the L-shaped hook 110 of the machine into the central hole 104 in the upper part of the plate, said hooking operations being facilitated by the fact that the angle of the hook 110 is greater than 90° (in fact, the hook 110 extends obliquely, not orthogonally, from the back wall of the machine). At the same time, the hooks (preferably clip-type hooks) 112, 113 are engaged into the holes 106 and 107 of the plate.

Once hooked up, the machine is firmly and safely secured, cannot be unhooked easily, and does not move, so that it can be operated without fear that it might fall, especially when operating the capsule insertion and removal mechanism (which is located, for example, in the upper part of the machine), or when moving the water tank relative to the machine's structure.

In order to intentionally unhook the machine, one must exert an upward force greater than the weight force of the machine itself (approx. 5-6 kg) by at least 5 kg.

This solves the above-mentioned problems that characterize the machines known in the art, in particular by ensuring that the machine will take up less room in the environment of use, thus freeing up some usable area in the kitchen.

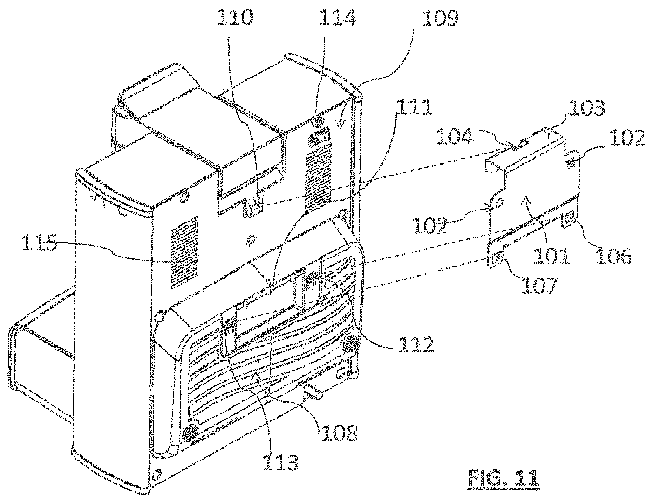

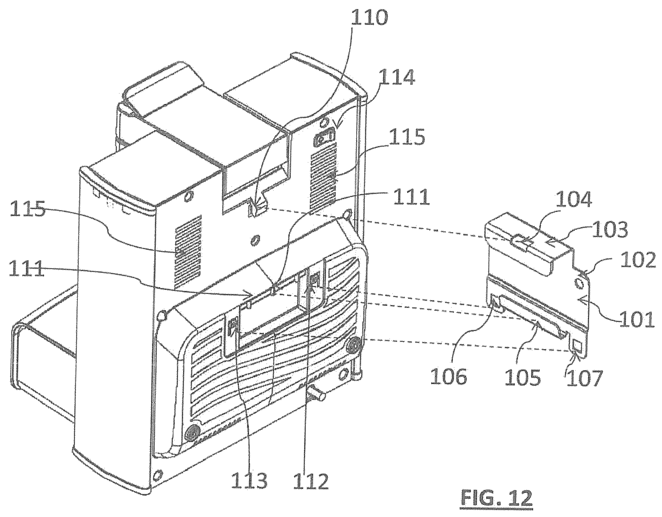

The plate can be made, for example, of galvanized metal having a thickness of 1.5 mm. In Figures 11 and 12, the dashed lines show the correspondences between the points where the machine is anchored to the plate.

Further aspects of the invention will now be described, which come from the need for solving the problems described below. Such further aspects may be combined with any previously and/or subsequently described aspects of the invention, or may per se constitute a separate invention.

Said type of coffee-making machine comprises electric or electronic parts to which the user can directly access, normally with his/her fingers, such as the power switch or the controls in the front part. It is plain that there is a safety problem regarding electric discharges, which might be due, for example, to water spilled from the machine and reaching said electric parts, resulting in the risk of electric shocks for the user who inadvertently touches said parts, or which might cause short circuits.

The household coffee-making machine according to one aspect of the invention further comprises, internally, a coffee-dispensing assembly, a water heating boiler, a pump assembly, which takes the water to the boiler and then supplies it under pressure, when heated, to the coffee-dispensing assembly, an electric assembly in a sealed container, not accessible from the outside, a switch assembly, said switch assembly being positioned in the uppermost part of the machine.

Said coffee-making machine further comprises a display and control assembly positioned in the uppermost part of the machine.

In said coffee-making machine, said switch assembly is positioned in a recess of the back wall of the machine.

In said coffee-making machine, said switch assembly is positioned on one side.

In said coffee-making machine, said display and control assembly is positioned in the front part of the machine.

In said coffee-making machine, said switch assembly is electrically upstream of all the electric loads of the machine.

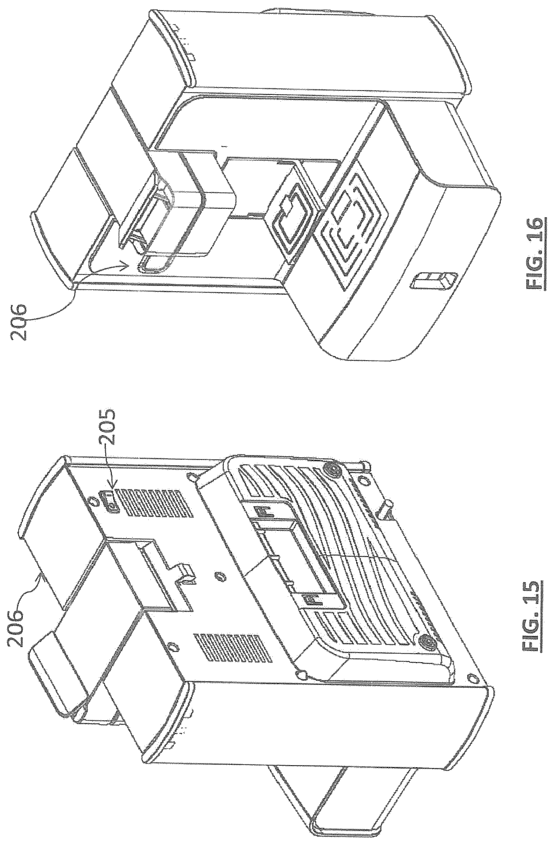

With reference to Figures 15 to 18, there is shown one example of embodiment of a household coffee-making machine: as is known, inside of it there are a coffee-dispensing assembly 201, a water heating boiler 203, a pump assembly 202, which takes the water to the boiler and then supplies it under pressure, when heated, to the coffee-dispensing assembly that produces coffee.

There is also an electronic control assembly 204 in a sealed box or container, inaccessible from the outside.

In accordance with one aspect of the present invention, in the upper rear part of the machine an assembly 205 is arranged, which comprises the machine's electric on/off switch. Said switch is preferably of the mechanical bipolar type. In addition, in the upper front part of the machine there is an electronic assembly 206, equipped with an interface board, which comprises a display and/or push-buttons for controlling the functions of the machine, preferably backlit touch buttons.

From the electric viewpoint, the switch is located upstream of all the loads, so that, when turned off, all loads are disconnected from the mains.

Preferably, the upper part of the back wall of the machine lies further forward than the lower part, and has a recess that houses the switch assembly 205, preferably on one side, the room thus obtained being sufficient, if the machine is secured to a wall or placed in adjacency to a vertical wall, to allow inserting a hand in order to actuate the switch, which operation can advantageously be carried out by inserting one hand from above or from the side, resulting in better ergonomics.

As can be seen, the elevated position of the switch assembly 205 and of the electronic assembly 206 ensures the utmost safety against water leaks, in that said assemblies cannot be wetted and cause electric shocks to a user coming in contact therewith. In particular, the elevated position of the switch assembly, which is in particular higher than any part being wet or run by water, ensures the utmost safety and best ergonomics. Further aspects of the invention will now be described, which come from the need for solving the problems described below. Such further aspects may be combined with any previously and/or subsequently described aspects of the invention, or may per se constitute a separate invention.

In known coffee-making machines, it is not easy to check the level of the water in the tank, especially in conditions of poor or absent environmental light. In particular, with such machines it is often necessary to extract the water tank in order to check its filling level. The aspects of the invention that will be described below aim at ensuring a more comfortable and reliable monitoring of the level of the water in the tank.

The household coffee-making machine according to one aspect of the invention further comprises: a compartment and a water tank adapted to be at least partially contained in said compartment, and a tank lighting system installed in said compartment.

In said coffee-making machine, said lighting system comprises one or more light points and/or lighting strips or sheets.

In said coffee-making machine, said light points are provided in one or more walls of said compartment that surround the tank, in particular in the rear wall and/or in the top wall of said compartment.

Preferably, said compartment is located in the lower part of the machine and has a front aperture.

Said coffee-making machine comprises: a tank adapted to be contained in said compartment; a drawer adapted to be inserted into said compartment and extracted frontally from said compartment, which is adapted to contain the tank, and comprising first concavities on the bottom of said compartment, second concavities on the bottom of said drawer, third concavities on the bottom of the tank, said first, second and third concavities extending along the depth dimension of the machine, such that said first concavities act as guides for said second concavities, said third concavities matching said second concavities when the tank is laid into the drawer, light points being provided in said first concavities, with corresponding slots in said first and second concavities to allow the light to pass through said first and second concavities.

In one variant, said coffee-making machine comprises: a tank adapted to be contained in said compartment; a drawer adapted to be inserted into said compartment and extracted frontally from said compartment, the drawer being adapted to contain the tank as one piece; fourth concavities on the bottom of said compartment, fifth concavities on the bottom of the tank and of the drawer, said fourth and fifth concavities extending along the depth dimension of the machine, such that said fourth concavities act as guides for said fifth concavities, light points being provided in said fourth concavities, with corresponding slots in said fifth concavities to allow the light to pass through them. In said coffee-making machine, said drawer comprises a front inspection window adapted to allow verifying the level of the water in the tank, the lighting being visible through said aperture.

In said coffee-making machine, said light points are anchored to said first concavities by means of headers.

Said coffee-making machine comprises power cables for said header-mounted light points, arranged inside said first concavities.

Said coffee-making machine comprises lighting system control means which turn on the lighting system only when the machine is actually being used.

In said coffee-making machine, said turning on of the lighting system is concordant with the stand-by state of the machine.

In said coffee-making machine, said lighting system uses different colours to signal the various stages of operation of the machine.

In said coffee-making machine, said lighting system is equipped with a blinking function, with frequencies representative of the information to be communicated.

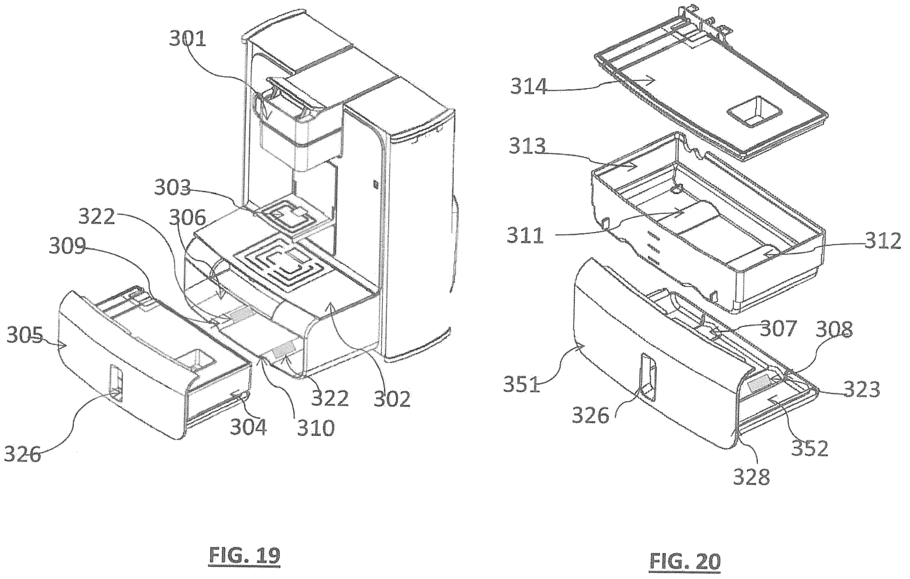

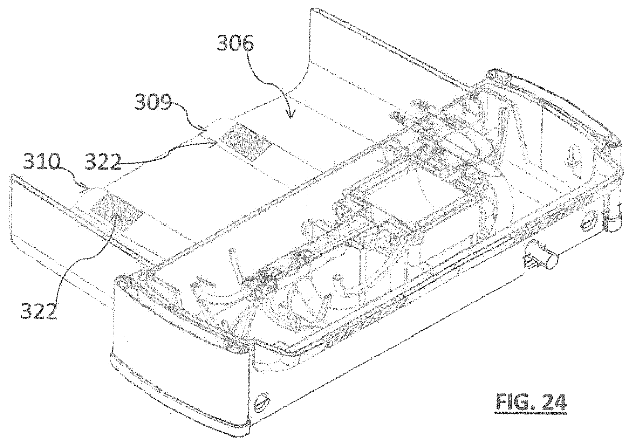

With reference to Figures 19 to 24, there is shown one example of embodiment of a household coffee-making machine: inside of it there are a coffee dispensing assembly, a water heating boiler, a pump assembly that takes the water to the boiler and then supplies it under pressure, when heated, to the coffee dispensing assembly 301. As it is dispensed by the dispensing assembly 1, the coffee is collected into an external container, e.g. a cup, that can be laid onto the base 302, since said base 302 protrudes forwards from the rest of the machine's structure, or, if a small coffee cup is used, on a front flap 303, which is located at an intermediate height between the base and the dispenser, and which can be rotated, e.g. about a vertical axis, between a working position, wherein it is available as a support for a cup, and an idle position, wherein it does not interfere with the positioning of another cup on the base 302.

The water tank 304 having a box-like structure is housed inside a drawer 305, which can, for example, be fully extracted from the front side of the machine. In the lower front part of the machine, under the base 302, a compartment 306 is formed which is adapted to contain the drawer and the tank, and which preferably protrudes forwards from the machine body. The compartment may be approximately 8-10 cm high. The tank is therefore accessible at the front.

The drawer comprises a front part 351 and a base 352 (Fig. 20). The tank 304 is removably laid onto the base 352 of the drawer 305. The tank base rests on the drawer base, thus also allowing the tank to be easily extracted for cleaning. As an alternative, the tank 304 and the drawer 305 may be obtained as one transparent piece.

On the bottom of the drawer there are two concave profiles 307, 308 acting as guides for the correct positioning on matching concavities 309, 310 on the bottom of the machine base. Corresponding concavities 311, 312 are also present on the bottom of the tank, so that it can be correctly positioned in the drawer.

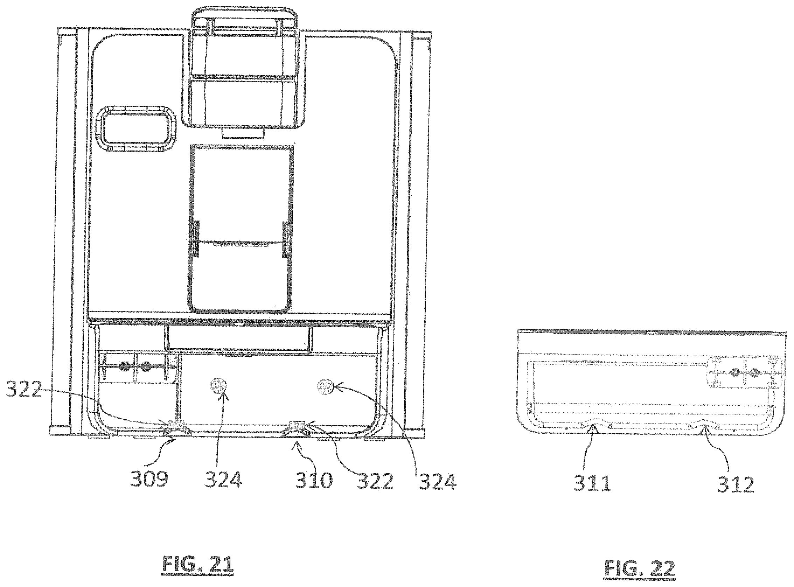

The concavities 307 - 312 extend along the depth dimension of the various elements. With particular reference to Figures 20, 21, it can be noticed that the tank comprises a water tray 313 and a cover 314.

The drawer advantageously has a front inspection window 326 for verifying the level of the water in the tank, which is made of transparent material.

in accordance with one aspect of the present invention, a system for illuminating the tank area is provided in order to make the water level more visible, e.g. through the front window 326.

One or more light points 324 are applied around the tank, i.e. to one or more walls of the machine base, preferably the rear wall and/or top wall of the base, facing towards the tank. As an alternative to or in combination with the above, one or more light points 324 can be integrated into the sliding guides of the drawer under corresponding slotted holes 322 formed in the guides. There are also corresponding slotted holes 323 in the guides of the base part of the drawer, if the latter is not made of transparent material, so that the light can pass through them when the drawer is closed.

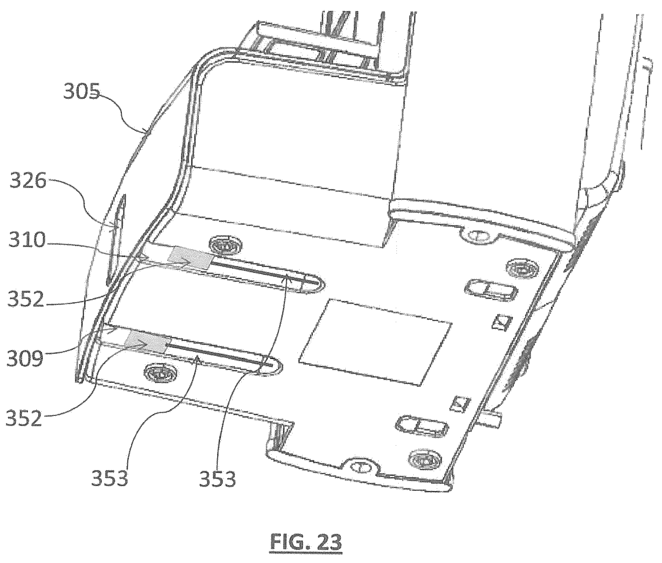

The light points are made, for example, by using LEDs, and are integral with the machine, so as not to interfere with the opening of the drawer. The tank is made of transparent plastic, e.g. SAN or polycarbonate, so that the light can pass through it. For example, the LEDs are integrated into the sliding guides 309, 310 of the compartment 306 in the base, and can be anchored to the machine body; the concavities are used for running the power cables 353 and comprise anchor points for LED-holding headers 352 (Fig. 23), the anchor points and the headers 352 being so arranged that the LEDs will match the slotted holes 322.

The light points 324 on the rear wall of the base are not aligned with the front window 326, so that they are not directly visible from the outside, thus creating a diffused light which is comfortable for the eye and aesthetically pleasant.

According to an advantageous variant of the present invention, the tank 304 and the drawer 305 can be obtained as one transparent piece (e.g. made of SAN), and its front part 351 (with the exception of the window 326) may then be opacified, in order to improve the exterior appearance of the machine, through an overmoulding or silk-screening operation or by applying a decorative plate. In this case, the slotted holes of the drawer will not be needed, since the light will be diffused directly from the holes in the machine base to the drawer.

The lighting system can be controlled by means of switches on a control panel accessible to the user, or automatically by the machine's electronic control assembly. Advantageously, the lighting system's control only turns it on when the machine is actually being used, and uses a time control function. For example, the ON/OFF stages of the lighting system are concordant with the control of the machine's stand-by stage, the tank area lighting system being automatically turned on as the machine wakes up from stand-by.

In addition, the lighting system may also be used to advantage as a user interface device utilizing different colours to signal the various stages of operation of the machine. To this end, multicolour LEDs or arrays of differently coloured LEDs may be used.

For example, one may use a basic white light, a red light during the heating stage, when the machine is not yet ready to dispense coffee, and a blue light that goes on at a predetermined time prior to entering the stand-by stage in order to signal the impending stand-by mode. As an alternative to colour variation, the LEDs may blink; in such a case, the blinking frequencies will be used as parameters representative of the information to be communicated to the user.

The stand-by stage activates after a predetermined time (e.g. > 5 min, preferably 30 min) has elapsed since the user has stopped interacting with the machine.

In one possible variant, said lighting system may comprise lighting strips or sheets as an alternative to or in combination with light points.

Further aspects of the invention will now be described, which come from the need for solving the problems described below. Such further aspects may be combined with any previously described aspects of the invention, or may per se constitute a separate invention.

In the coffee-making machines known in the art, it is not easy to handle and position the coffee cup correctly, with the risk of spilling coffee, especially in conditions of poor or absent environmental light.

The household coffee-making machine according to one aspect of the invention comprises a lighting system for the front cup holder area.

In said coffee-making machine, said lighting system comprises at least one light point in the area behind a coffee dispenser of the machine, which illuminates the cup holder area from above.

In said coffee-making machine, said light point is inclined forwards.

Said coffee-making machine comprises lighting system control means which turn on the lighting system only when the machine is actually being used.

In said coffee-making machine, said turning on of the lighting system is concordant with the stand-by state of the machine.

In said coffee-making machine, said lighting system uses different colours to signal the various stages of operation of the machine.

In said coffee-making machine, said lighting system is equipped with a blinking function, with frequencies representative of the information to be communicated.

In said coffee-making machine, said at least one light point comprises a LED.

Said coffee-making machine comprises a used-capsule drawer in said front cup holder area, and comprises a reflecting plate in the front part of said drawer, which is adapted to reflect the light produced by said lighting system towards said front cup holder area. Said coffee-making machine comprises a pump assembly for water circulation, said lighting system being electrically arranged in series with the electric supply of the pump assembly.

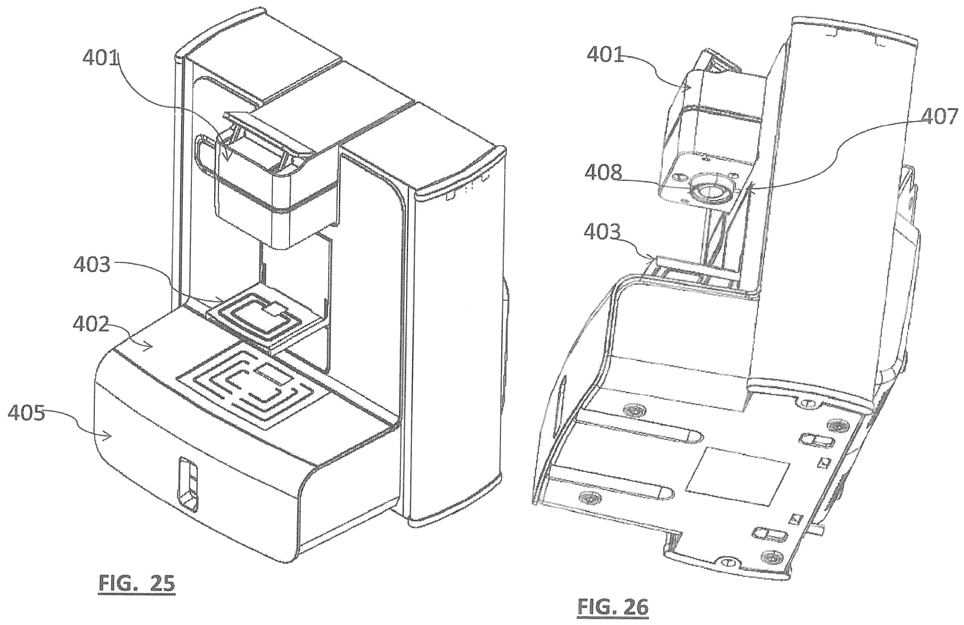

With reference to Figure 25, there is shown one example of embodiment of a household coffee-making machine, viewed from the outside: inside of it there are a coffee dispensing assembly, a water heating boiler, a pump assembly that takes the water to the boiler and then supplies it under pressure, when heated, to the coffee-dispensing assembly 401, which comprises an injector and a capsule holder where the user places the capsule containing ground coffee blend. As it is dispensed by the dispensing assembly 1, the coffee is collected into an external container, e.g. a cup, that can be laid onto the base 402, since said base 402 protrudes forwards from the rest of the machine's structure, or, if a small coffee cup is used, on a front flap 403, which is located at an intermediate height between the base and the dispenser, and which can be rotated, e.g. about a vertical axis, between a working position, wherein it is available as a support for a cup, and an idle position, wherein it does not interfere with the positioning of another cup on the base 402. Inside the base 402 it is advantageously possible to obtain a compartment for accommodating a drawer 405 associated with the water tank.

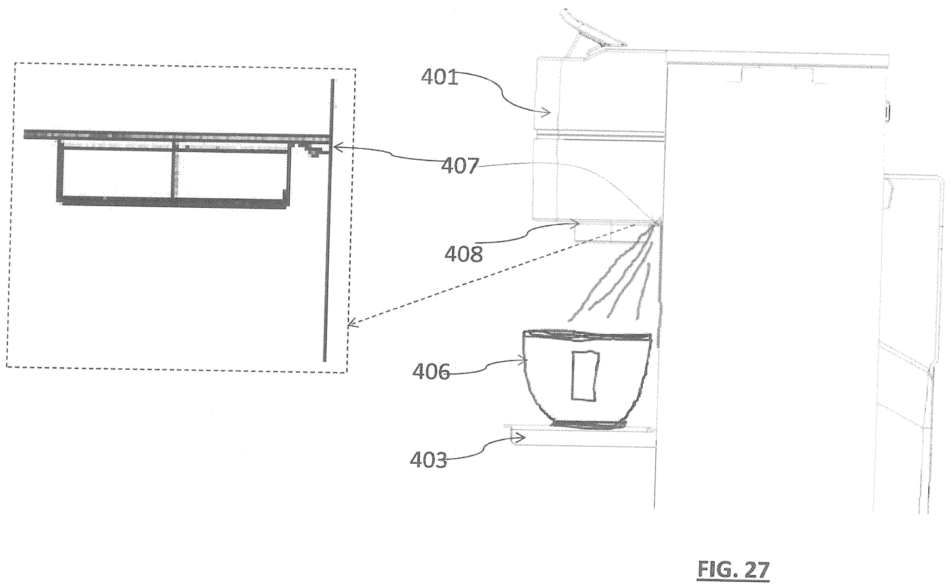

With reference to Figures 26 and 27, in accordance with one aspect of the present invention a system is provided for illuminating the front area of the machine whereon the coffee cup 406 is laid, said system being particularly effective when the front flap 403 is used.

In particular, a light point 407 is installed in the region behind the coffee dispenser 408, so as to illuminate the cup from above.

The light point 407 is preferably inclined forwards to a certain extent and, for example, it uses a LED, as clearly shown in the enlarged view of Figure 27.

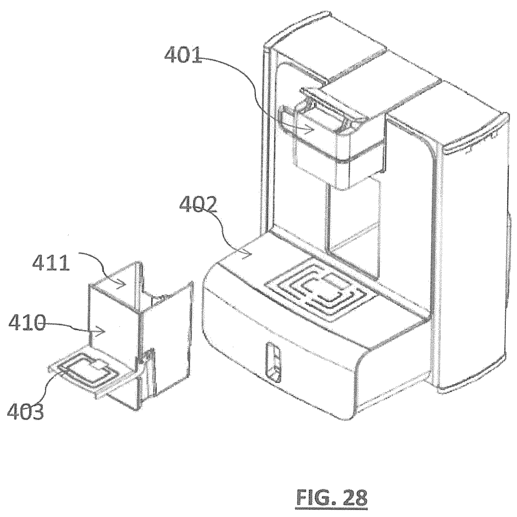

The part 410 (Fig. 28) of the front wall of the machine which is located behind the cup holder flap 403, as well as the flap itself, may advantageously be made of a material offering a certain degree of light reflectance, e.g. polished steel, for the purpose of increasing the level of illumination of the cup area. For example, said part 410 of the front wall may be a reflecting plate applied to the front wall of a used-capsule drawer 41 by means of, for example, bi-adhesive tape or glue. The structure of the used-capsule drawer 411 may be made of ABS, while the reflecting plate may be made of steel.

The light point 407 is adapted to illuminate a wide area comprising the cup position and the front wall of the machine, so as to fully exploit the reflections generated by the polished walls.

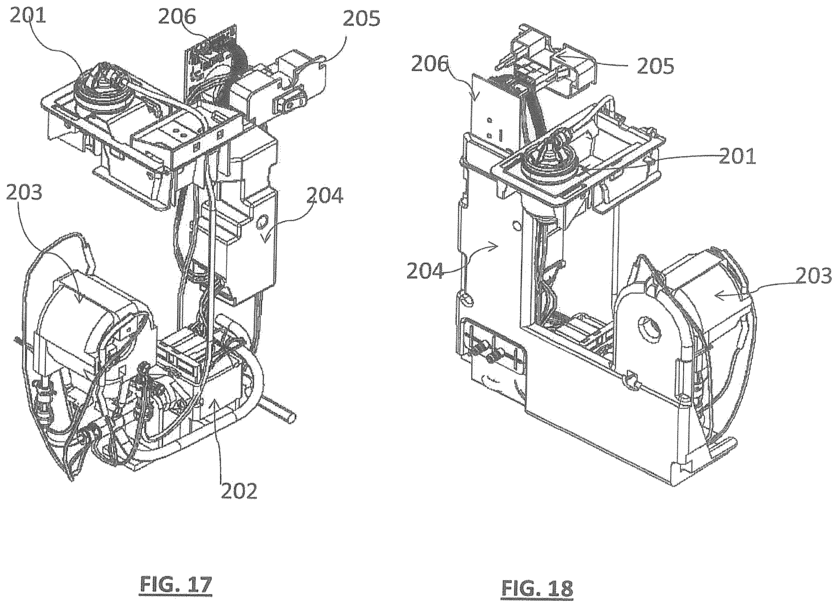

Advantageously, the light point 407 is only turned on when the machine is actually being used, with a time control function. For example, the ON/OFF stages of the lighting system may be concordant with the control of the machine's stand-by stage. The lighting system can be controlled through a switch on a control panel accessible to a user. Also, the lighting system is advantageously electrically arranged in series with the electric supply of the pump assembly (202, Fig. 17). The resulting advantages consist of the facts that the light point 407 will automatically go on when coffee is prepared and/or dispensed, and that a control already existing in the electronic control assembly 204 can be used for controlling the light point 407 (thus avoiding the use of a dedicated control for the light point 407).

Moreover, the light point 407 may advantageously have different colours to signal the various stages of operation of the machine. To this end, multicolour LEDs or arrays of differently coloured LEDs may be used.

For example, one may use a basic white light, a red light during the heating stage, when the machine is not yet ready, and a blue light that goes on at a predetermined time prior to entering the stand-by stage in order to signal the impending stand-by mode. As an alternative to coloured light, blinking frequencies may be used as a signalling function. The stand-by stage activates after a predetermined time (e.g. > 5 min, preferably 30 min) has elapsed since the user has stopped interacting with the machine.

The above-described non-limiting examples may be subject to further variations without departing from the protection scope of the present invention, including all equivalent embodiments known to a man skilled in the art.

The elements and features shown in the various preferred embodiments may be combined together without however departing from the protection scope of the present invention.

From the above description, those skilled in the art will be able to produce the object of the invention without introducing any further construction details.

## Claims

1. A household coffee-making machine comprising:
- a compartment (306) and a tank (304) for water supply, which is adapted to be at least partially contained in said compartment;
- a tank lighting system installed in said compartment.

2. A coffee-making machine according to claim 1, wherein said lighting system comprises one or more light points (322, 323, 324) and/or lighting strips or sheets.

3. A coffee-making machine according to claim 2, wherein said light points are provided in one or more walls of said compartment that surround the tank, in particular in the rear wall and/or in the top wall of said compartment.

4. A coffee-making machine according to claim 2, comprising a tank (304) adapted to be contained in said compartment; a drawer (305) adapted to be inserted into said compartment (306) and extracted frontally from said compartment (306), which is adapted to contain the tank, and comprising first concavities (309, 310) on the bottom of said compartment, second concavities (307, 308) on the bottom of said drawer, third concavities (311, 312) on the bottom of the tank (304), said first, second and third concavities extending along the depth dimension of the machine, such that said first concavities act as guides for said second concavities, said third concavities matching said second concavities when the tank is laid into the drawer, light points being provided in said first concavities, with corresponding slots in said first and second concavities to allow the light to pass through said first and second concavities.

5. A coffee-making machine according to claim 2, comprising:
- a tank adapted to be contained in said compartment;
- a drawer adapted to be inserted into said compartment and extracted frontally from said compartment, the drawer being adapted to contain the tank as one piece;
- fourth concavities on the bottom of said compartment, fifth concavities on the bottom of the tank and of the drawer, said fourth and fifth concavities extending along the depth dimension of the machine, such that said fourth concavities act as guides for said fifth concavities, light points being provided in said fourth concavities, with corresponding slots in said fifth concavities to allow the light to pass through them.

6. A coffee-making machine according to claim 4 or 5, wherein said drawer (305) comprises a front inspection window (326) adapted to allow verifying the level of the water in the tank, the lighting being visible through said aperture.

7. A coffee-making machine according to claim 4 or 5, wherein said light points are anchored to said first or fourth concavities by means of headers (352).

8. A coffee-making machine according to claim 7, comprising power cables (353) for said header-mounted light points, arranged inside said first or fourth concavities.

9. A coffee-making machine according to claim 1, comprising lighting system control means which turn on the lighting system only when the machine is actually being used.

10. A coffee-making machine according to claim 9, wherein said turning on of the lighting system is concordant with the stand-by state of the machine.

11. A coffee-making machine according to claim 1, wherein said lighting system uses different colors to signal the various stages of operation of the machine.

12. A coffee-making machine according to claim 1, wherein said lighting system is equipped with a blinking function, with frequencies representative of the information to be communicated.

13. A coffee-making machine according to any one of the previous claims, wherein said compartment is located in the lower part of the machine and has a front aperture.

14. A household coffee-making machine, in particular according to any of the previous claims, comprising internally a coffee-dispensing assembly (201), a water heating boiler (202), a pump assembly (203), which takes the water to the boiler and then supplies it under pressure, when heated, to the coffee-dispensing assembly, an electric assembly (204) in a sealed container, not accessible from the outside, a switch assembly (205), **characterized in that** said switch assembly (205) is positioned in the uppermost part of the machine.

15. A household coffee-making machine, in particular according to any of the previous claims, comprising a lighting system for the front cup holder area.
